# EUROPEAN PATENT APPLICATION

(11) **EP 1 898 511 A2**
(43) Date of publication of application: **12.03.2008**
(21) Application number: 07016500.6
(22) Date of filing: 22.08.2007
(51) Int. Cl.: H02K 1/18

(54) **Electric rotating machine**

(30) Priority: 05.09.2006 JP 2006240825
(71) Applicant: Yamaha Hatsudoki Kabushiki Kaisha, Iwata-shi, Shizuoka-ken 438-8501 (JP)
(72) Inventor: Nakajima, Masumi, Iwata-shi, Shizuoka-ken 438-8501 (JP)
(74) Representative: Grünecker, Kinkeldey, Stockmair & Schwanhäusser Anwaltssozietät

(57) **Abstract**

The present invention relates to an electric rotating machine comprising a rotor (20), which rotates about a rotating shaft, a stator (40,50), which surrounds the rotating shaft and is opposed to the rotor (20) in an axial direction of the rotating shaft, wherein the stator includes a stationary stator (40) and a moving stator (50) opposed to the stationary stator (40) in the axial direction to make rotational displacement, and wherein the stationary stator (40) is formed with a moving stator (50) support portion, which supports the moving stator rotatably and coaxially with the rotating shaft.

## Description

The present invention relates to an electric rotating machine utilized in vehicles, an engine, to which the electric rotating machine is mounted, and a straddle-type vehicle mounting thereon the electric rotating machine.

In recent years, awareness for environmental problems is heightened such that attention is attracted to hybrid straddle-type vehicles (for example, motorcycles) traveling making use of not only a driving force of an engine but also a driving force of an electric rotating machine.

A speed range, in which an electric rotating machine can be driven, is limited to a narrow range since a counterelectromotive force corresponding to the intensity of magnetic field and the rotating speed of a rotor is generated on a coil. Therefore, an electric rotating machine, in which driving in a wide speed range is made possible by varying the intensity of magnetic field, has been conventionally proposed as an electric rotating machine utilized in straddle-type vehicles.

For example, Patent Document 1 discloses an electric rotating machine, in which a rotor is arranged in opposition to a stator in an axial direction of a rotating shaft and a distance between the rotor and the stator is varied. Thereby, high torque can be output in low-speed rotation, for example, by decreasing a distance between the rotor and the stator to intensify the magnetic field at the time of low-speed travel. On the other hand, high-speed rotation can be achieved by increasing a distance between the rotor and the stator to weaken the magnetic field generated on a coil at the time of high-speed travel to reduce a counterelectromotive force generated on the coil.

Patent Document 1: JP-A-2005-223993

With the electric rotating machine disclosed in Patent Document 1, however, it is difficult to exactly control the intensity of magnetic field. That is, with the electric rotating machine, the rotating rotor is displaced axially in order to vary the intensity of magnetic field. Therefore, there is caused a problem that a position of the rotor relative to the stator is liable to make an error.

Hereupon, the applicant of the present application has examined an electric rotating machine comprising a stationary stator provided with a plurality of teeth, round which coils are wound, and a moving stator provided with a plurality of teeth and displacing in a circumferential direction. Thereby, the intensity of magnetic field can be varied by displacing the moving stator in the circumferential direction and changing a distance between the teeth of the moving stator and the teeth of the stationary stator. Also, exact control can be exercised as compared with the case where a rotor is displaced in an axial direction.

However, the electric rotating machine involves a fear of complexity in assembly work since two stators, that is, the moving stator and the stationary stator are provided as stators. That is, with the electric rotating machine, the moving stator and the stationary stator are arranged in opposition to each other, these stators being arranged to be coaxial with a rotating shaft. However, the moving stator is positioned to be offset in a diametrical direction, so that there is a fear of complexity in assembly.

The invention has been thought of in view of the problems described above and has its object to provide an electric rotating machine capable of facilitating an assembly work, an engine, to which the electric rotating machine is mounted, and a straddle-type vehicle.

This objective is solved in an inventive manner by an electric rotating machine comprising a rotor, which rotates about a rotating shaft, a stator, which surrounds the rotating shaft and is opposed to the rotor in an axial direction of the rotating shaft, wherein the stator includes a stationary stator and a moving stator opposed to the stationary stator in the axial direction to make rotational displacement, and wherein the stationary stator is formed with a moving stator support portion, which supports the moving stator rotatably and coaxially with the rotating shaft.

Alternatively or mutually with this solution, the objective of the present invention is solved by an electric rotating machine comprising a rotor, which rotates about a rotating shaft, a stator, which surrounds the rotating shaft and is opposed to the rotor in an axial direction of the rotating shaft, wherein the stator includes a stationary stator and a moving stator opposed to the stationary stator in the axial direction to make rotational displacement, and a case cover, which covers the stator from the axial direction, wherein the case cover is formed with a stationary stator support portion which supports the stationary stator coaxially with the rotating shaft.

Preferably, the stationary stator includes a plurality of stationary side teeth arranged annularly to surround the rotating shaft, and wherein the moving stator includes a plurality of moving side teeth arranged annularly to surround the rotating shaft, the moving stator making rotational displacement to vary a distance between the moving side teeth and the stationary side teeth.

Further, preferably the stationary stator support portion of the case cover includes an outer peripheral surface extending in the axial direction to surround the rotating shaft and contacting with an inner peripheral surface of the stationary stator, and the outer peripheral surface supports the stationary stator coaxially with the rotating shaft.

Still further, preferably, the moving stator support portion of the stationary stator includes an outer peripheral surface extending toward the moving stator to contact with an inner peripheral surface of the moving stator, and the outer peripheral surface supports the moving stator rotatably and coaxially with the rotating shaft.

Preferably, an inner peripheral surface of the moving stator support portion of the stationary stator contacts with an outer peripheral surface of the stationary stator support portion of the case cover whereby the stationary stator is supported by the stationary stator support portion.

Further, preferably an oil flow passage, through which a lubricating oil flows in the axial direction, is provided between an outer peripheral surface of the stationary stator support portion and an inner peripheral surface of the stationary stator.

Still further, preferably an oil guide passage is formed on an inner wall of the case cover to lead a lubricating oil to the oil flow passage.

Yet further still, preferably an inlet, through which the lubricating oil flows to the oil flow passage, is opened toward the case cover, and an outlet, through which the lubricating oil flows from the oil flow passage, is opened toward the rotating shaft.

There is further provided an engine having an electric rotating machine according to one of the above embodiments.

Preferably, the electric rotating machine is mounted to a crank shaft of the engine to drive together with the engine at the time of traveling of a vehicle to cause a vehicle to travel and to assist driving of the starter motor to start up the engine.

Further, preferably the electric rotating machine comprises the stationary stator, the moving stator, and the crank case cover, which covers these stators from axially, wherein the stationary stator includes a plurality of stationary side teeth arranged annularly, and the moving stator includes a plurality of moving side teeth arranged annularly and rotationally displaces to vary a distance between the moving side teeth and the stationary side teeth of the stationary stator, and wherein the crankcase cover is formed with a stationary stator support portion, which supports the stationary stator coaxially with a crank shaft, and the stationary stator is formed with a moving stator support portion, which supports the moving stator) rotatably and coaxially with the crank shaft.

Preferably, it further comprises a reduction gear, a one-way clutch, and a flywheel mounted to the crank shaft, wherein the reduction gear is rotatable relative to the crank shaft, the one-way clutch is provided between the reduction gear and the flywheel, and wherein the rotor of the electric rotating machineis mounted to the flywheel.

There is further provided a straddle-type vehicle mounting thereon an electric rotating machine and an engine in line with one of the above embodiments.

In the following, the present invention is explained in further detail with respect to several embodiments thereof in conjunction with the accompanying drawings, wherein:
- Fig. 1: is a side view showing a motorcycle mounting thereon an electric rotating machine according to an embodiment,
- Fig. 2: is a side view showing a rear portion of the motorcycle,
- Fig. 3: is a cross sectional view taken along the line iii-iii in Fig. 2,
- Fig. 4: is a cross sectional view showing the electric rotating machine,
- Fig. 5: is an exploded, perspective view showing a rotor and a stator, which are provided on the electric rotating machine,
- Fig. 6: is a view showing a case cover of the electric rotating machine as viewed from inside,
- Fig. 7: is a front view (a view as seen from a side of the stationary stator) showing the rotor, a rear view (a view as seen from a side of a flywheel), and a cross sectional view,
- Fig. 8: is a cross sectional view showing a stationary stator provided on the electric rotating machine in a transverse direction (circumferential direction),
- Fig. 9: is a view showing a manner, in which a moving stator on the electric rotating machine displaces, and
- Fig. 10: is a view showing a change, in intensity of magnetic flux, caused by displacement of the moving stator,

### Description of Reference Numerals and Signs:

1: motorcycle, 2: rear suspension, 3: front wheel, 4: rear wheel, 5: front fork, 6: rear arm, 7: steering shaft, 8: body frame, 9: seat, 10: electric rotating machine, 11: oil flow passage, 11a: inlet, 11b: outlet, 20: rotor, 21: magnet, 22: yoke, 23: engagement hole forming portion, 30: stator, 40: stationary stator, 41: teeth (stationary side teeth), 42: coil, 43: mold resin portion, 43f: moving stator support portion, 43g: inner peripheral surface of stationary stator, 43j: outer peripheral surface of moving stator support portion, 50: moving stator, 51: teeth (moving side teeth), 52: base, 53: mold resin portion, 53a: inner peripheral surface of mold resin portion of moving stator, 60: crank case cover (case cover), 61: stationary stator support portion, 61 a: outer peripheral surface of stationary stator support portion, 62: oil guide path, 67: gear, 68: actuator, 70: engine, 71: cylinder, 72: cylinder head, 73: connecting rod, 74: crank shaft (rotating shaft), 75: belt continuously variable transmission, 76: drive pulley, 77: belt, 78: crank case, 79: oil retaining bearing, 80: reduction gear, 81: one-way clutch, 82: flywheel, 83: engagement member, 84: bolt, 85: nut, 86: damper member, 91: bearing

An embodiment will be described below with reference to the drawings.

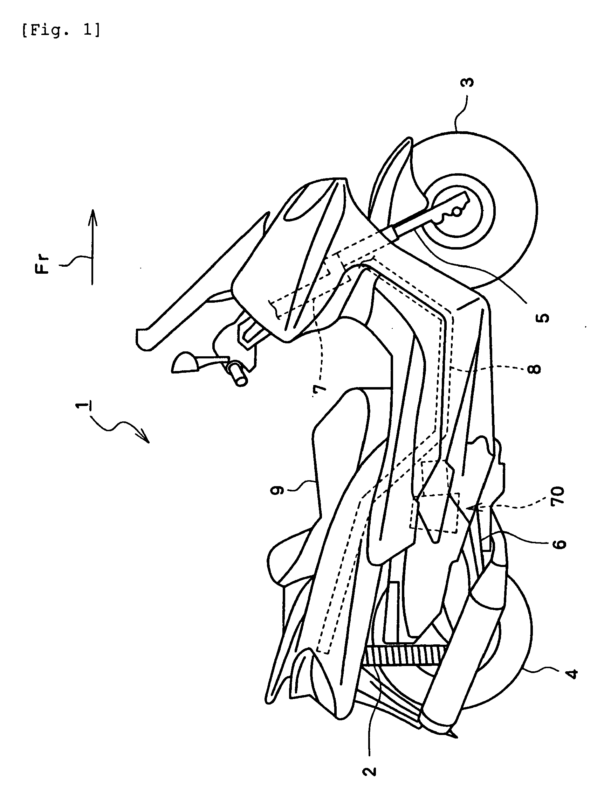

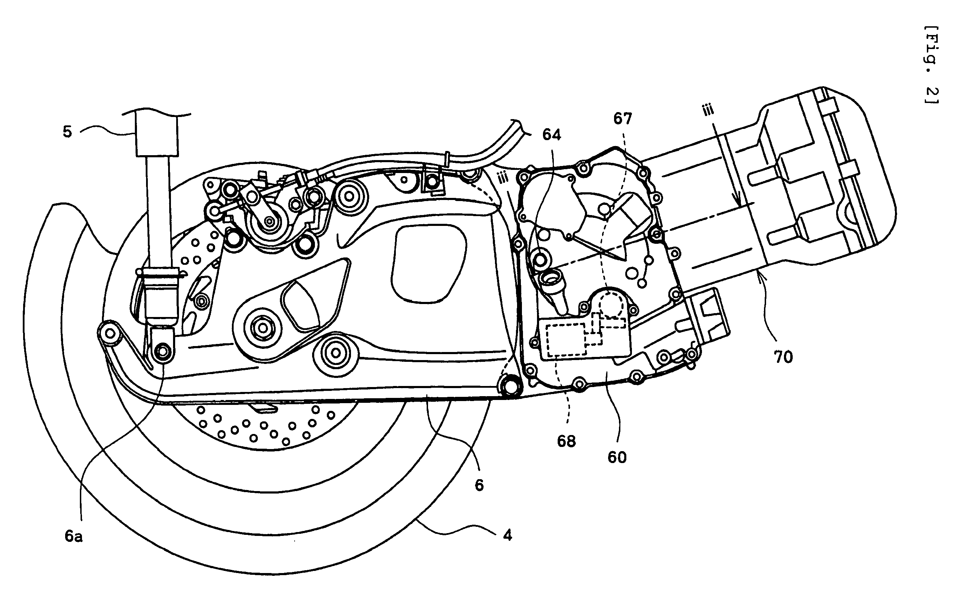

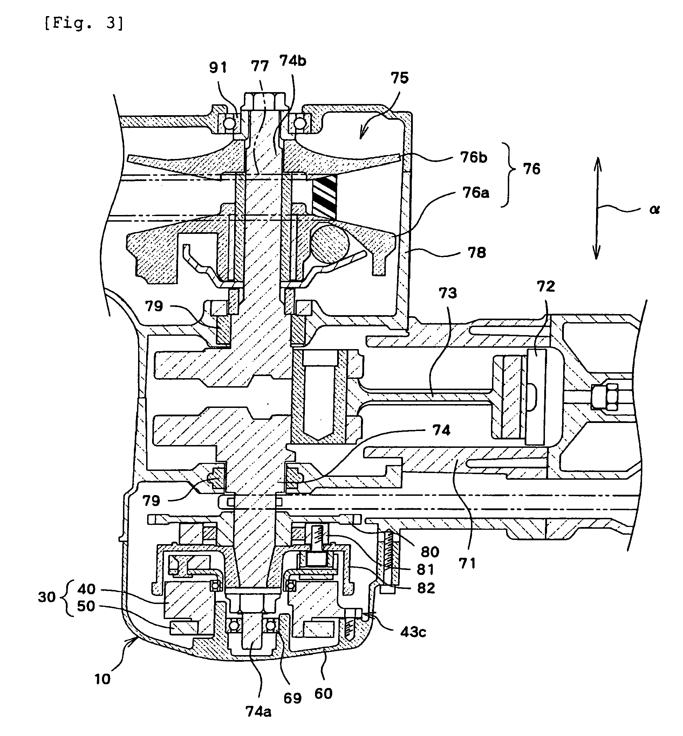

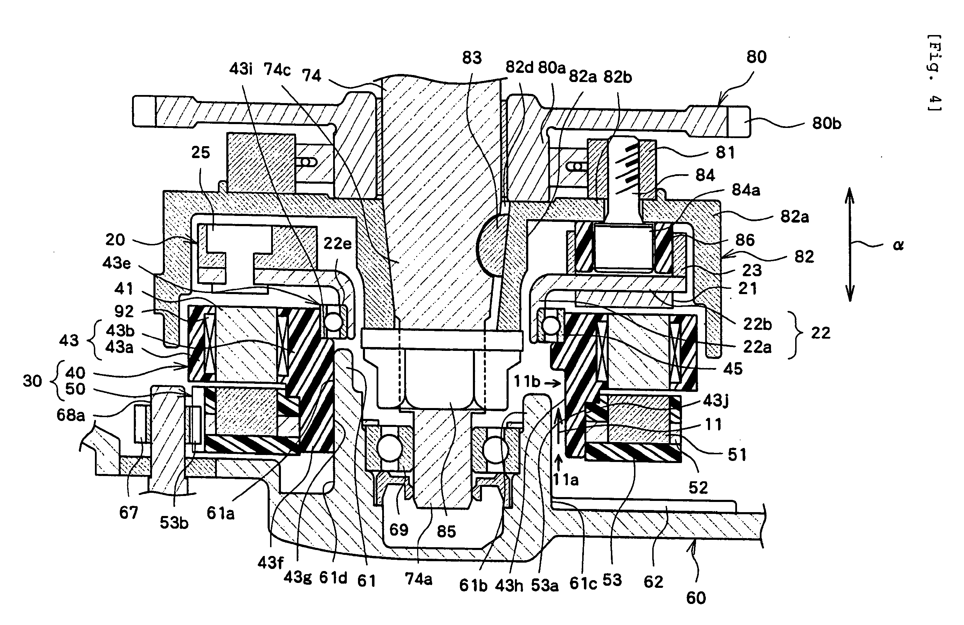

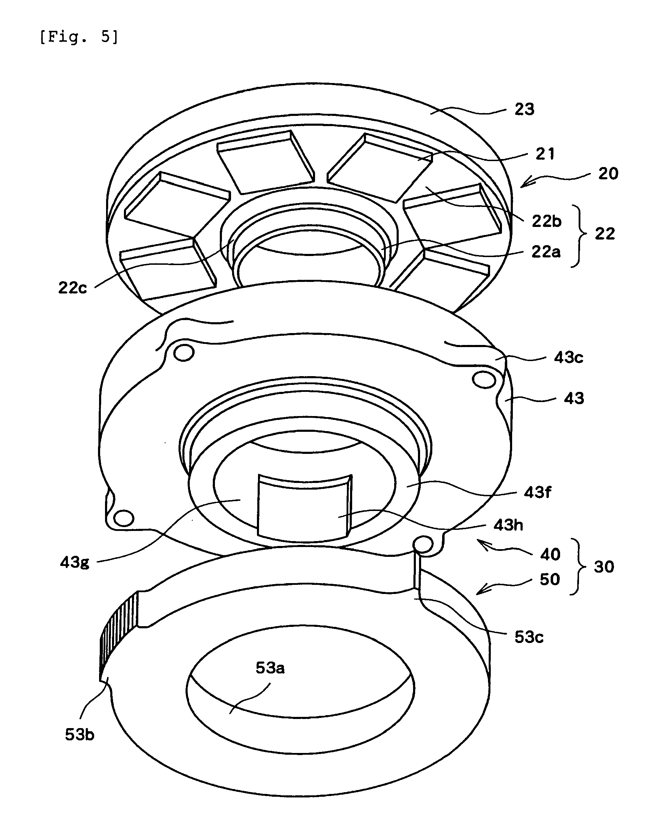

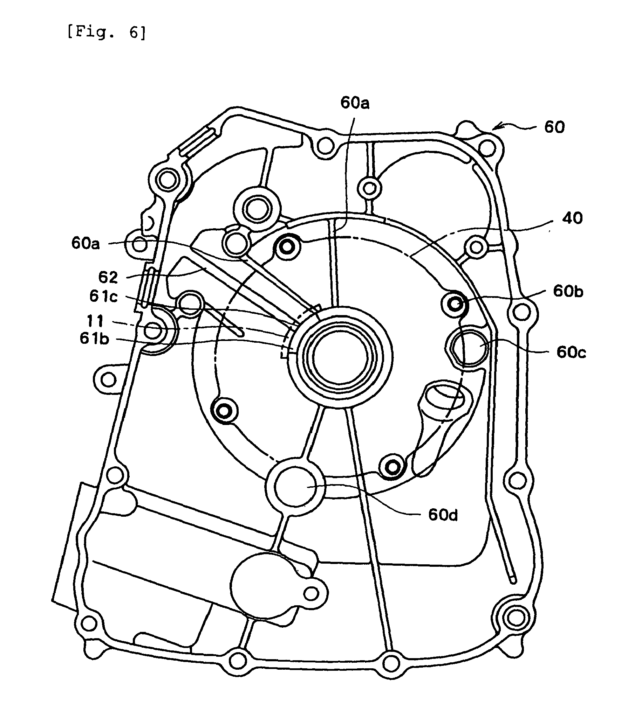

Fig. 1 is a side view showing a motorcycle 1 mounting thereon an electric rotating machine 10 according to the embodiment. Fig. 2 is a side view showing a rear portion of the motorcycle 1, Fig. 3 is a cross sectional view taken along the line iii-iii in Fig. 2, Fig. 4 is a cross sectional view showing the electric rotating machine 10, Fig. 5 is a perspective view showing a rotor 20 and a stator 30, which are provided on the electric rotating machine 10, and Fig. 6 is a view showing a case cover 60 of the electric rotating machine 10 as viewed from inside. In addition, as described later, the electric rotating machine 10 comprises, as a stator 30, a stationary stator 40 and a moving stator 50, and these stators include teeth, mold resin, etc. but respective parts are indicated by the same parallel line in Fig. 3 for the sake of simplicity.

As shown in Fig. 1, a lower end of a front fork 5 supports a front wheel 3 of the motorcycle 1 rotatably. A steering shaft 7 is connected to an upper end of the front fork 5. The steering shaft 7 is supported rotatably by a front end of a body frame 8. The body frame 8 is an underbone type frame and extends obliquely downward from a front end thereof to be bent to extend horizontally. The body frame is bent obliquely upward below a seat 9 to extend toward the rear of a vehicle. An upper end of a rear suspension 15 is mounted to a rear end of the body frame 8. A lower end of the rear suspension 15 is mounted to a rear end 6a of a rear arm 6 (see Fig. 2). The rear arm 6 supports a rear wheel 4.

An engine 70 is arranged below the seat 9. The engine 70 is of a unit swing type to move up and down together with the rear arm 6 with a pivot shaft (not shown) mounted to the body frame 8 as a supporting point. As shown in Fig. 3, a cylinder 71 is provided at a center of the engine 70 in a vehicle width direction (direction indicated by α in the figure), and a piston 72 is accommodated in the cylinder 71. An upper end of a connecting rod 73 is mounted to the piston 72 and a crank shaft (rotating shaft) 74 is mounted to a lower end of the connecting rod 73.

The crank shaft 74 is accommodated in a crank case 78. A central portion of the crank shaft 74 is supported rotatably by oil retaining bearings 79, 79 provided on the crank case 78. Also, an end 74b of the crank shaft 74 is supported rotatably by a bearing 91 supported on the crank case 78 and the other end 74a thereof is supported rotatably by a bearing 69 supported on a crank case cover (referred below simply to as case cover) 60 described later.

In addition, the case cover 60 is mounted to a side of the crank case 78 and a lubricating oil is stored in bottoms of the crank case 78 and the case cover 60. The lubricating oil is flung up in the case cover 60 upon rotation of a rotor 20 of the electric rotating machine 10 described later to pour on the crank shaft 74 and a starter 30 of the electric rotating machine 10 to lubricate the same.

A drive pulley 76 of a belt continuously variable transmission 75 is mounted in the vicinity of the end 74b of the crank shaft 74. The belt continuously variable transmission 75 includes a belt 77, the belt 77 being wound round the drive pulley 76 and a driven pulley (not shown) separated from the drive pulley 76 and arranged on a rear portion of a vehicle. Rotational drive of the crank shaft 74 is transmitted to the driven pulley through the belt 77 from the drive pulley 76. In addition, the drive pulley 76 includes a moving sheave 76a capable of displacing axially of the crank shaft 74 and a stationary sheave 76b fixed in position in an axial direction. When a vehicle travels, the moving sheave 76a moves axially according to the rotating speed of the crank shaft 74 whereby the drive pulley 76 is varied in radius and so a reduction ratio is varied.

A reduction gear 80, a one-way clutch 81, a flywheel 82, and the electric rotating machine 10 are mounted in this order to the other end 74a of the crank shaft 74 as shown in Fig. 4.

The reduction gear 80 includes a cylindrical-shaped cylinder portion 80a and a gear portion 80b extending diametrically (referred below simply to as diametrically) of the crank shaft 74. The cylinder portion 80a permits the crank shaft 74 to extend therethrough to idle relative to the crank shaft 74. The gear portion 80b meshes with a starter motor (not shown), which is arranged separately from the crank shaft 74. The cylinder portion 80a is fitted into the one-way clutch 81. Also, the one-way clutch 81 is fixed to the flywheel 82 by means of bolts 84, so that they interlock with each other. The flywheel 82 is joined to the crank shaft 74, so that they also interlock with each other.

At the starting of the engine 70, the reduction gear 80 reduces rotation of the starter motor in speed to transmit the same to the one-way clutch 81. Driving force transmitted to the one-way clutch 81 is transmitted to the crank shaft 74 through the flywheel 82. On the other hand, when starting of the engine 60 is terminated, driving of the starter motor stops, so that rotation of the crank shaft 74 caused by driving of the engine 70 is cut off by the one-way clutch 81 not to be transmitted to the reduction gear 80 and the starter motor.

The flywheel 82 includes a cylindrical-shaped small-diameter cylinder portion 82a, into which the crank shaft 74 is inserted, a disk portion 82b, and a cylindrical-shaped large-diameter cylinder portion 82c. The disk portion 82b is disk-shaped to extend diametrically from an end of the small-diameter cylinder portion 82a. The large-diameter cylinder portion 82c rises axially (referred below simply to as axially) of the crank shaft 74 from an outer peripheral edge of the disk portion 82b and toward the electric rotating machine 10.

An inner peripheral surface of the small-diameter cylinder portion 82a is formed to be gradually increased in diameter toward the end 74a of the crank shaft 74. On the other hand, the crank shaft 74 is formed with a tapered portion 74c, which is gradually decreased in diameter toward the end 74a. The inner peripheral surface of the small-diameter cylinder portion 82a comes into pressure contact with the tapered portion 74c whereby the flywheel 82 is joined to the crank shaft 74.

In addition, a nut 85 is fitted onto the crank shaft 74, the nut 85 pushing the flywheel 82 toward a center of the crank shaft 74. Also, the small-diameter cylinder portion 82a is formed on the inner peripheral surface thereof with a groove-shaped recess 82d, which extends axially. On the other hand, a semi-circular shaped engagement member 83 is fitted onto the tapered portion 64a, the engagement member 83 engaging with the recess 82d of the flywheel 82 in a direction of rotation.

The disk portion 82b is formed circumferentially with a plurality of holes for bolting, the disk portion 82b being fixed to the one-way clutch 81 by means of the bolts 84. Heads of the bolts 84 project toward the electric rotating machine 10 to engage with the rotor 20 of the electric rotating machine 10. The rotor 20 will be described below in detail.

Here, the electric rotating machine 10 is described in detail. The electric rotating machine 10 is mounted to a crank shaft 74 of the engine 70 to drive together with the engine 70 at the time of traveling of a vehicle to cause a vehicle to travel and to assist driving of the starter motor to start up the engine 70. Also, the electric rotating machine 10 may function as a generator when the engine 70 is driven. As shown in Fig. 4, the electric rotating machine 10 includes the rotor 20, the stator 30, and the case cover 60, and the stator 30 includes the stationary stator 40 and the moving stator 50. In addition, the rotor 20, the stationary stator 40 and the moving stator 50 are arranged in this order from a center of the crank shaft 74 in the electric rotating machine 10. Also, these parts are covered by the case cover 60 from axially (outward in the vehicle width direction).

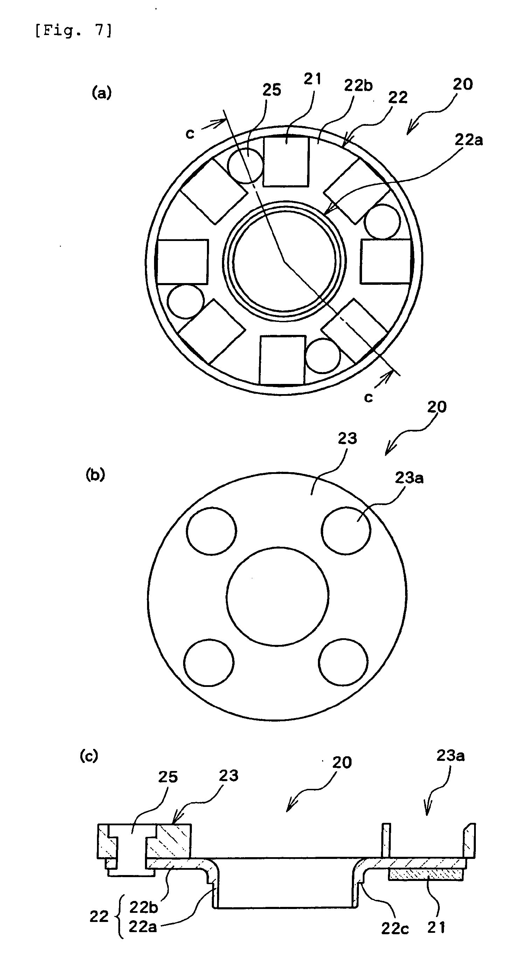

First, the rotor 20 is described in detail. Fig. 7(a) is a front view (a view as seen from a side of the stationary stator 40) showing the rotor 20, Fig. 7(b) is a rear view (a view as seen from a side of the flywheel 82), and Fig. 7(c) is a cross sectional view taken along the line c-c in Fig. 7(a). The rotor 20 includes a permanent magnet 21, a yoke 22, and an engagement hole forming portion 23.

The yoke 22 includes an annular-shaped supported portion 22a and a disk-shaped magnet support portion 22b extending diametrically from an end of the supported portion 22a toward the flywheel 82.

The supported portion 22a is formed to be annular-shaped so as to surround the crank shaft 74 and an inner peripheral surface thereof is separate from the crank shaft 74 (see Fig. 4). A bearing 45 is arranged between the supported portion 22a and the stationary stator 40 and the supported portion 22a is supported rotatably on the stationary stator 40. A support construction with the stationary stator 40 will be described below in detail.

A plurality (here, eight) of magnets 21 are mounted to the magnet support portion 22b to be spaced equally in a circumferential direction.

The engagement hole forming portion 23 is annular in shape and fixed to a back surface (surface toward the flywheel 82) of the yoke 22 by a rivet 25. The engagement hole forming portion 23 is formed circumferentially thereof with a plurality (here, four) of engagement holes 23a. The heads 84a of the bolts 84 for fixation of the flywheel 82 and the one-way clutch 81 are fitted into the engagement holes 23a to engage with the rotor 20 in a direction of rotation (see Fig. 4). Thereby, the rotor 20 and the flywheel 82 interlock with each other to rotate about the crank shaft 74. In addition, damper members (for example, annular rubber) 86 having elasticity are fitted onto the heads 84a of the bolts 84, the damper members 86 and the heads 84a being fitted into the engagement portions 23a (see Fig. 4).

Subsequently, the stationary stator 40 will be described in detail. The stationary stator 40 is formed annularly to surround the crank shaft 74 and arranged to be opposed to the rotor 20 in an axial direction. As shown in Fig. 4, the stationary stator 40 includes a plurality (here, twelve) of stationary side teeth 41, which are arranged annularly to be opposed to the magnets 21, coils 42 wound round the respective stationary side teeth 41, and an annular mold resin portion 43, in which a resin containing a lubricant molds the stationary side teeth 41 and the coils 42.

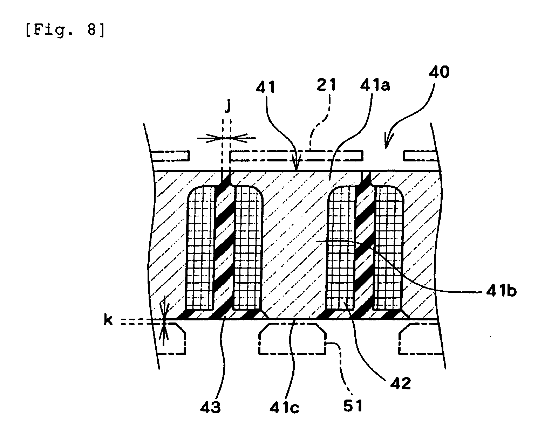

The stationary side teeth 41 are made of iron cores and electricity is supplied to the coils 42 whereby magnetic flux is generated in the stationary side teeth. Fig. 8 is a cross sectional view showing the stationary stator 40 in a transverse direction (circumferential direction). Wide (lengthy in the transverse direction) magnet opposed portions 41 a are formed on opposite sides of stationary side teeth 41 to the magnets 21. Coils 42 are wound round drum portions 41 b, which are smaller in width than the magnet opposed portions 41 a. A distance j between adjacent two magnet opposed portions 41 a is larger than a distance k between moving side teeth 51 of the moving stator 50 and the stationary side teeth 41.

As shown in Fig. 4, the mold resin portion 43 comprises a portion (referred below to as outer resin portion) 43a disposed radially outwardly of the stationary side teeth 41, and a portion (referred below to as inner resin portion) 43b disposed radially inwardly of the stationary side teeth 41.

A plurality (here, four) of bolt mounts 43c projecting radially slightly are formed at ends of the outer resin portion 43a toward the case cover 60 (see Figs. 5 and 3). Bolt holes 60b are formed on an inner wall of the case cover 60 to be positioned corresponding to the bolt mounts 43c (see Fig. 6). The bolt mounts 43c are fixed to the bolt holes 60b by bolts whereby the stationary stator 40 is fixed to the case cover 60.

A rotor support portion 43e is formed on a side of the inner resin portion 43b toward the rotor 20. The bearing 45 is interposed between the rotor support portion 43e and the supported portion 22a of the yoke 22 whereby the rotor support portion 43e supports the rotor 20 rotatably through the bearing 45. In addition, a support surface 43i opposed to the yoke 22 and perpendicular to an axial direction is formed on the rotor support portion 43e. Also, a supported surface 22c opposed to the stationary stator 40 and perpendicular to an axial direction is formed on the supported portion 22a. The bearing 45 is arranged between these surfaces.

The inner resin portion 43b is formed with a moving stator support portion 43f, which extends (rises) annularly toward the moving stator 50 (see Fig. 5). An outer peripheral surface of the moving stator support portion 43f is the same in diameter as an inner peripheral surface of the moving stator 50, and these surfaces contact with each other. Thereby, the moving stator support portion 43f supports the moving stator 50 to make the same rotatable on the same axis as that of the crank shaft 74.

The case cover 60 is formed on an inner wall thereof with a stationary stator support portion 61, which extends (rises) cylindrically in an axial direction. An inside diameter of the inner resin portion 43b is equal to an outside diameter of the stationary stator support portion 61, the stationary stator 40 is fitted onto the stationary stator support portion 61, and an inner peripheral surface 43g of the stationary stator 40 contacts with an outer peripheral surface 61 a of the stationary stator support portion 61. Thereby, the stationary stator 40 is supported to be coaxial with the crank shaft 74. In addition, the stationary stator support portion 61 surrounds and supports the end 74a of the crank shaft 74 rotatably.

Also, the moving stator 50 and the moving stator support portion 43f are positioned radially outwardly of the stationary stator support portion 61 and an inner peripheral surface of the moving stator support portion 43f contacts with the outer peripheral surface 61 a of the stationary stator support portion 61.

Also, as described above, a lubricating oil is stored in bottoms of the case cover 60 and the crank case 78. An oil flow passage 11 is provided between the inner peripheral surface 43g of the inner resin portion 43b and the outer peripheral surface 61 a of the stationary stator support portion 61 to cause a lubricating oil, which is flung up by the rotating rotor 20, to flow in an axial direction. The oil flow passage 11 will be described later in detail.

Subsequently, the moving stator 50 will be described in detail. The moving stator 50 is fitted onto the moving stator support portion 43f of the stationary stator 40 to be opposed to the stationary stator 40 in an axial direction.

As shown in Fig. 4, the moving stator 50 includes a plurality (here, the same in number as the stationary side teeth 41) of moving side teeth 51, a base 52, and a mold resin portion 53. The plurality of the moving side teeth 51 comprise an iron core likewise the stationary side teeth 41 and are arranged annularly in a manner to surround the crank shaft 74. Also, the moving side teeth 51 are arranged to be opposed to the stationary side teeth 41 and to be slightly separate from the stationary side teeth 41 (see Fig. 8). The base 52 is disk-shaped to hold the plurality of moving side teeth 51 in a state of being arranged annularly. The mold resin portion 53 is formed to be annular to mold the moving side teeth 51 and the base 52 with a resin, which contains a lubricant.

An inner peripheral surface 53a of the mold resin portion 53 contacts with an outer peripheral surface 43j of the moving stator support portion 43f of the stationary stator 40. Thereby, the moving stator 50 displaces circumferentially along the moving stator support portion 43f. With the electric rotating machine 10, the electric rotating machine 10 can be changed in output characteristic by displacing the moving stator 50 circumferentially to change a distance between the stationary side teeth 41 and the moving side teeth 51. Displacement of the moving stator 50 will be described below in detail.

The mold resin portion 53 is formed on an outer peripheral surface thereof with a radially projecting gear engagement 53b (see Fig. 5). A gear 67 meshes with the gear engagement 53b. The gear 67 is connected through a shaft 68a to an actuator 68 mounted to an outer wall of the case cover 60 and driven by the actuator 68 to rotate in forward and reverse directions (see Fig. 2 or Fig. 4). Thereby, the moving stator 50 reciprocates circumferentially. In addition, the shaft 68a is inserted into the case from a hole 60d formed on the case cover 60 (see Fig. 4 or Fig. 6).

Subsequently, the case cover 60 will be described in detail. The case cover 60 is bowl-shaped and mounted to the side of the crank case 78 as described above to cover the stator 30 and the rotor 20 from the axial direction and to store therein a lubricating oil.

Also, the bearing 69 is fitted inside the stationary stator support portion 61 formed on the inner wall of the case cover 60. The bearing 69 supports the end 74a of the crank shaft 74 rotatably.

Also, the oil flow passage 11 is provided between the outer peripheral surface 61 a of the stationary stator support portion 61 and the inner peripheral surface 43g of the inner resin portion 43b to cause a lubricating oil, which pours on the stator 30 or the case cover 60, to be led to the crank shaft 74.

The oil flow passage 11 is formed by denting, for example, a part of the inner peripheral surface of the inner resin portion 43b and separating the part (referred below to as oil flow passage forming surface) 43h radially from the outer peripheral surface 61a of the stationary stator support portion 61 (see Fig. 5 and Fig. 4). As shown in Fig. 4, an inlet 11a, through which a lubricating oil flows into the oil flow passage 11, is opened toward the case cover 60 (outward in the vehicle width direction) and an outlet 11b, through which a lubricating oil flows out, is provided inwardly of the bearing 69 in the vehicle width direction to be opened toward the crank shaft 74.

In addition, with the electric rotating machine 10, the oil flow passage forming surface 43h is formed above a horizontal position on an inner peripheral surface of the inner resin portion 43b (see Fig. 6). Also, that portion (referred below to as oil flow passage forming portion) 61 b of the stationary stator support portion 61, which is opposed to the oil flow passage forming surface 43h, is lower (shorter in an axial direction) than the remaining portion of the stationary stator support portion 61. While there is shown an example, in which only one oil flow passage forming surface 43h is formed on the inner resin portion 43b, a plurality of oil flow passage forming surfaces 43h may be formed on the inner resin portion 43b.

An oil guide path 62 is formed on the inner wall of the case cover 60 to lead a lubricating oil to the oil flow passage 11. The oil guide path 62 may comprise, for example, a grooved recess extending radially from a base 61 c of the oil flow passage forming portion 61 b as shown in Fig. 6. The oil guide path 62 may comprise a projection extending radially from the base 61 c of the oil flow passage forming portion 61 b.

A plurality of ribs 60a for reinforcement of the case cover 60 are formed on the inner wall of the case cover 60. The ribs 60a may comprise a projection formed to extend radially from a base 61d of the stationary stator support portion 61.

In addition, the case cover 60 is formed with a window portion 60c, through which a rotated position of the moving stator 50 is visually confirmed from outside the case cover 60. A projection 53c is formed on the mold resin portion 53 of the moving stator 50 to be positioned corresponding to the window portion 60c (see Fig. 5).

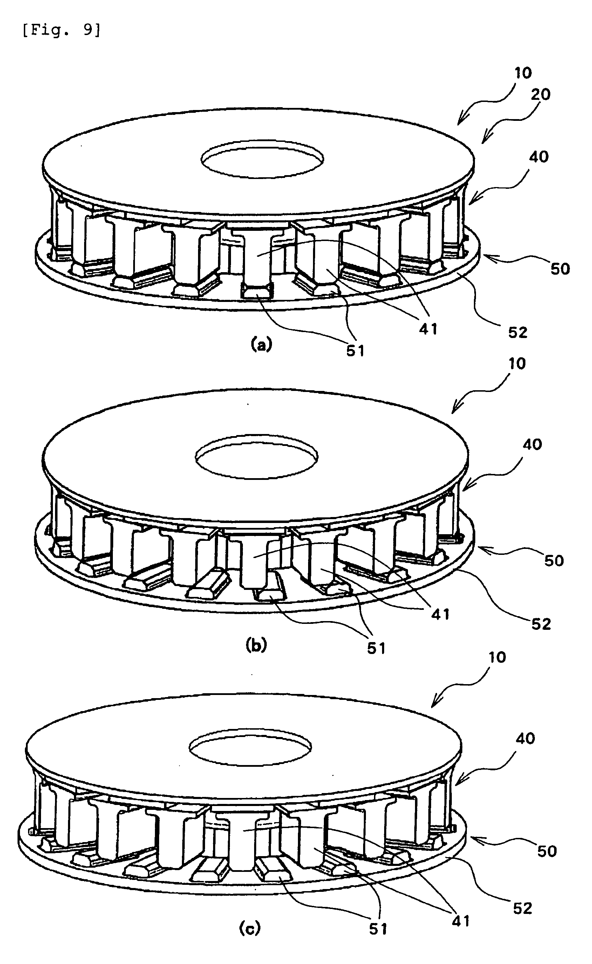

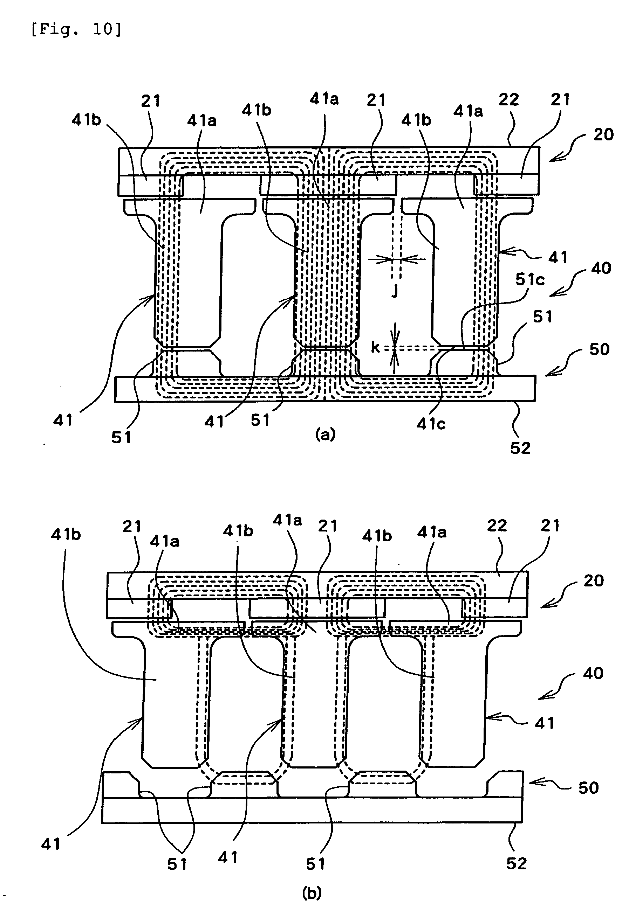

Here, an explanation is given to rotation of the moving stator 50 and a change in magnetic field, caused thereby. Fig. 9 is a view showing a manner, in which the moving stator 50 rotates about the crank shaft 74, and Fig. 10 is a view showing a change in amount of magnetic flux. In addition, in these figures, the inner resin portion 43 shown in Figs. 4 and 5 and the mold resin portion 53 are omitted for the sake of explanation.

Fig. 9(a) shows a state, in which the moving side teeth 51 is just opposed to the stationary side teeth 41. In this state, a distance between an end surface 41 c of the stationary side teeth 41 toward the moving stator 50 and an end surface 51 c of the teeth 51 toward the stationary stator 40 assumes a minimum value k (see Fig. 10(a)). The stationary side teeth 41 is arranged so that the spacing j between adjacent two magnet opposed portions 41 a is larger than the spacing k. Therefore, magnetic resistance between the magnet opposed portions 41 a is larger than magnetic resistance between the stationary side teeth 41 and the moving side teeth 51. Consequently, as shown in Fig. 10(a), a major part of magnetic flux flows inside the drum portions 41 b, round which the coils 42 are wound, to form an intense magnetic field, so that the electric rotating machine 10 can output a high torque at low speed rotation.

On the other hand, the actuator 68 rotationally drives to cause the moving side teeth 51 to move to an intermediate position between two stationary side teeth 41 shown in Fig. 9(c) via a midway position shown in Fig. 9(b). At this time, an interval between the stationary side teeth 41 and the moving side teeth 51 enlarges, so that magnetic resistance between them increases. Therefore, as shown in Fig. 10(b), a major part of magnetic flux does not transmit inside the coils 42 but flows from the magnet opposed portions 41 a of the stationary side teeth 41 to magnet opposed portions 41 a adjacent thereto. Consequently, a weak magnetic field is formed in this case, so that the electric rotating machine 10 can perform high speed rotation at low torque.

With the electric rotating machine 10 described above, the moving stator support portion 43f is formed on the mold resin portion 43 of the stationary stator 40, the moving stator support portion 43f supporting the moving stator 50 rotatably and coaxially with the crank shaft 74. Also, the stationary stator support portion 61 is formed on the case cover 60 to support the stationary stator 40 coaxially with the crank shaft 74. Thereby, the stationary stator 40 and the moving stator 50 are opposed to each other and become easy to be arranged coaxially with the crank shaft 74, so that the electric rotating machine is improved in quality of assembly.

Also, since the oil flow passage 11 is provided on the electric rotating machine 10, a lubricating oil is liable to pour on the vicinity of the end 74a of the crank shaft 74, so that seizure of, for example, the bearing 69 and the bearing 45 or the like is prevented.

In addition, the present teaching is not limited to the embodiment of an electric rotating machine 10 described above but susceptible to various modifications. As described above, the oil flow passage 11 is formed by denting, for example, the inner peripheral surface 43g of the stationary stator 40. However, by denting the outer peripheral surface 61 a of the stationary stator support portion 61 formed on the case cover 60, a part of the inner peripheral surface 43g of the stationary stator 40 may be separated radially from the outer peripheral surface 61 a of the stationary stator support portion 61 to form the oil flow passage 11.

The description above discloses (amongst others) in order to solve the problem described above, an embodiment of an electric rotating machine comprising a rotor, which rotates about a rotating shaft, a stator, which surrounds the rotating shaft and is opposed to the rotor in an axial direction of the rotating shaft, and a case cover, which covers the stator from the axial direction, wherein the stator includes a stationary stator and a moving stator opposed to the stationary stator in the axial direction to make rotational displacement, the stationary stator includes a plurality of stationary side teeth arranged annularly to surround the rotating shaft, the moving stator includes a plurality of moving side teeth arranged annularly to surround the rotating shaft, the moving stator making rotational displacement to vary a distance between the moving side teeth and the stationary side teeth, the case cover is formed with a stationary stator support portion, which supports the stationary stator coaxially with the rotating shaft, and the stationary stator is formed with a moving stator support portion, which supports the moving stator rotatably and coaxially with the rotating shaft.

Also, in order to solve the problems, an engine according to the embodiments mounts thereto the electric rotating machine.

Also, in order to solve the problems, a straddle-type vehicle according to the embodiments mounts thereon the electric rotating machine.

According to the present teaching of these embodiments, the stator can be varied in intensity of magnetic field by displacing the moving stator in a circumferential direction and changing a distance between the stationary side teeth and the moving side teeth. Also, the stationary stator and the moving stator become easy to be arranged coaxial with each other, so that the electric rotating machine is improved in quality of assembly.

In addition, here, the straddle-type vehicle includes, for example, a motorcycle (including a scooter), four-wheeled buggy, snowmobile, etc.

According to a further embodiment, the stationary stator support portion of the case cover may include an outer peripheral surface extending in the axial direction to surround the rotating shaft and contacting with an inner peripheral surface of the stationary stator, and the outer peripheral surface may support the stationary stator coaxially with the rotating shaft. According to this embodiment, it becomes possible to support the stationary stator further stably.

Also, according to a further embodiment, the moving stator support portion of the stationary stator may include an outer peripheral surface extending toward the moving stator to contact with an inner peripheral surface of the moving stator, and the outer peripheral surface may support the moving stator rotatably and coaxially with the rotating shaft. According to this embodiment, it becomes possible to rotatably support the moving stator further stably.

Also, according to a further embodiment, an inner peripheral surface of the moving stator support portion of the stationary stator contacts with an outer peripheral surface of the stationary stator support portion of the case cover whereby the stationary stator is supported by the stationary stator support portion.

Also, according to a further embodiment, an oil flow passage, through which a lubricating oil flows in the axial direction, is provided between an outer peripheral surface of the stationary stator support portion and an inner peripheral surface of the stationary stator. According to this embodiment, the electric rotating machine is effectively lubricated by a lubricating oil.

Also, according to a further embodiment, an oil guide passage may be formed on an inner wall of the case cover to lead a lubricating oil to the oil flow passage. Thereby, it is possible to further effectively lubricate the electric rotating machine.

Also, according to a further embodiment, an inlet, through which the lubricating oil flows to the oil flow passage, is opened toward the case cover, and an outlet, through which the lubricating oil flows from the oil flow passage, is opened toward the rotating shaft. With such construction, the lubricating oil is liable to pour on the rotating shaft.

According to a particularly described embodiment, in order to provide an electric rotating machine capable of a change in intensity of magnetic field and improvement in quality of assembly, there is provided an electric rotating machine 10 comprises a stationary stator 40, a moving stator 50, and a (crank) case cover 60, which covers these stators from axially; the stationary stator 40 includes a plurality of stationary side teeth 41 arranged annularly; the moving stator 50 includes a plurality of moving side teeth 51 arranged annularly and rotationally displaces to vary a distance between the moving side teeth 51 and the stationary side teeth 41 of the stationary stator 40; the case cover 60 is formed with a stationary stator support portion 61, which supports the stationary stator 40 coaxially with a crank shaft 74; also, the stationary stator 40 is formed with a moving stator support portion 43f, which supports the moving stator 50 rotatably and coaxially with the crank shaft 74.

The description above describes according to a preferred first aspect, an embodiment of an electric rotating machine comprising: a rotor, which rotates about a rotating shaft, a stator, which surrounds the rotating shaft and is opposed to the rotor in an axial direction of the rotating shaft, and a case cover, which covers the stator from the axial direction, wherein the stator includes a stationary stator and a moving stator opposed to the stationary stator in the axial direction to make rotational displacement, the stationary stator includes a plurality of stationary side teeth arranged annularly to surround the rotating shaft, the moving stator includes a plurality of moving side teeth arranged annularly to surround the rotating shaft, the moving stator making rotational displacement to vary a distance between the moving side teeth and the stationary side teeth, the case cover is formed with a stationary stator support portion, which supports the stationary stator coaxially with the rotating shaft, and the stationary stator is formed with a moving stator support portion, which supports the moving stator rotatably and coaxially with the rotating shaft.

Further, according to a preferred second aspect of the embodiment of an electric rotating machine according to a first aspect, the stationary stator support portion of the case cover includes an outer peripheral surface extending in the axial direction to surround the rotating shaft and contacting with an inner peripheral surface of the stationary stator, and the outer peripheral surface supports the stationary stator coaxially with the rotating shaft.

Further, according to a preferred third aspect of the embodiment of the electric rotating machine according to a first aspect, the moving stator support portion of the stationary stator includes an outer peripheral surface extending toward the moving stator to contact with an inner peripheral surface of the moving stator, and the outer peripheral surface supports the moving stator rotatably and coaxially with the rotating shaft.

Further, according to a preferred fourth aspect of the embodiment of the electric rotating machine according to a first aspect, an inner peripheral surface of the moving stator support portion of the stationary stator contacts with an outer peripheral surface of the stationary stator support portion of the case cover whereby the stationary stator is supported by the stationary stator support portion.

Further, according to a preferred fifth aspect of the embodiment of the electric rotating machine according to a first aspect, an oil flow passage, through which a lubricating oil flows in the axial direction, is provided between an outer peripheral surface of the stationary stator support portion and an inner peripheral surface of the stationary stator.

Further, according to a preferred sixth aspect of the embodiment of the electric rotating machine according to a fifth aspect, an oil guide passage is formed on an inner wall of the case cover to lead a lubricating oil to the oil flow passage.

Further, according to a preferred seventh aspect of the embodiment of the electric rotating machine according to a fifth aspect, an inlet, through which the lubricating oil flows to the oil flow passage, is opened toward the case cover, and an outlet, through which the lubricating oil flows from the oil flow passage, is opened toward the rotating shaft.

Further, according to a preferred eighth aspect, there is disclosed an engine mounting thereto the electric rotating machine according to a first aspect.

Further, according to a preferred ninth aspect, there is disclosed a straddle-type vehicle mounting thereon the electric rotating machine according to a first aspect.

## Claims

1. Electric rotating machine (10) comprising
a rotor (20), which rotates about a rotating shaft (74),
a stator, which surrounds the rotating shaft (74) and is opposed to the rotor (20) in an axial direction of the rotating shaft (74),
wherein the stator includes a stationary stator (40) and a moving stator (50) opposed to the stationary stator (40) in the axial direction to make rotational displacement, and wherein
the stationary stator (40) is formed with a moving stator support portion (43g), which supports the moving stator (50) rotatably and coaxially with the rotating shaft (74).

2. Electric rotating machine in particular according to claim 1, comprising a rotor (20), which rotates about a rotating shaft (74), a stator, which surrounds the rotating shaft (74) and is opposed to the rotor (20) in an axial direction of the rotating shaft (74), wherein the stator includes a stationary stator (40) and a moving stator (50) opposed to the stationary stator (40) in the axial direction to make rotational displacement, and a case cover (60), which covers the stator from the axial direction, wherein the case cover (60) is formed with a stationary stator support portion (61) which supports the stationary stator (40) coaxially with the rotating shaft (74).

3. Electric rotating machine according to claim 1 or 2, wherein the stationary stator (40) includes a plurality of stationary side teeth arranged annularly to surround the rotating shaft (74), and wherein the moving stator (50) includes a plurality of moving side teeth arranged annularly to surround the rotating shaft (74), the moving stator (50) making rotational displacement to vary a distance (k) between the moving side teeth and the stationary side teeth.

4. Electric rotating machine according to claim 2 or 3, wherein the stationary stator support portion (61) of the case cover (60) includes an outer peripheral surface (61d) extending in the axial direction to surround the rotating shaft (74) and contacting with an inner peripheral surface (43g) of the stationary stator (40), and the outer peripheral surface (61 d) supports the stationary stator (40) coaxially with the rotating shaft (74).

5. Electric rotating machine according to one of the claims 1 to 4, wherein the moving stator support portion (43f) of the stationary stator (40) includes an outer peripheral surface (43j) extending toward the moving stator (50) to contact with an inner peripheral surface (53a) of the moving stator (50), and the outer peripheral surface (43j) supports the moving stator (50) rotatably and coaxially with the rotating shaft (74).

6. Electric rotating machine according to one of the claims 2 to 5, wherein an inner peripheral surface (43g) of the moving stator support portion (43f) of the stationary stator (43) contacts with an outer peripheral surface (61 d) of the stationary stator support portion (61) of the case cover (60) whereby the stationary stator (40) is supported by the stationary stator support portion (61).

7. Electric rotating machine according to one of claims 2 to 6, wherein an oil flow passage (11), through which a lubricating oil flows in the axial direction, is provided between an outer peripheral surface (61 d) of the stationary stator support portion (61) and an inner peripheral surface (43g) of the stationary stator (40).

8. Electric rotating machine according to claim 7, wherein an oil guide passage (62) is formed on an inner wall of the case cover (60) to lead a lubricating oil to the oil flow passage (11).

9. Electric rotating machine according to claim 7 or 8, wherein an inlet (11 a), through which the lubricating oil flows to the oil flow passage (11), is opened toward the case cover (60), and an outlet (11 b), through which the lubricating oil flows from the oil flow passage (11), is opened toward the rotating shaft (74).

10. Engine mounting thereto an electric rotating machine according to one of the claims 1 to 9.

11. Engine according to claim 10, wherein the electric rotating machine (10) is mounted to a crank shaft (74) of the engine (70) to drive together with the engine (70) at the time of traveling of a vehicle to cause a vehicle to travel and to assist driving of the starter motor to start up the engine (70).

12. Engine according to claim 11, wherein the electric rotating machine (10) comprises the stationary stator (40), the moving stator (50), and the crank case cover (60), which covers these stators from axially, wherein the stationary stator (40) includes a plurality of stationary side teeth (41) arranged annularly, and the moving stator (50) includes a plurality of moving side teeth (51) arranged annularly and rotationally displaces to vary a distance between the moving side teeth (51) and the stationary side teeth (41) of the stationary stator (40), and wherein the crankcase cover (60) is formed with a stationary stator support portion (61), which supports the stationary stator (40) coaxially with a crank shaft (74), and the stationary stator (40) is formed with a moving stator support portion (43f), which supports the moving stator (50) rotatably and coaxially with the crank shaft (74).

13. Engine according to one of the claims 11 or 12, further comprising a reduction gear (80), a one-way clutch (81), and a flywheel (82) mounted to the crank shaft (74), wherein the reduction gear (80) is rotatable relative to the crank shaft (74), the one-way clutch (81) is provided between the reduction gear (80) and the flywheel (82), and wherein the rotor (20) of the electric rotating machine (10) is mounted to the flywheel (82).

14. Straddle-type vehicle mounting thereon an electric rotating machine according to one of the claims 1 to 9, to the engine according to one of the claims 10 to 13.
